**Europäisches Patentamt**

**European Patent Office**

**Office européen des brevets**

(11) Veröffentlichungsnummer: **0 254 265**
A2

# (12) EUROPÄISCHE PATENTANMELDUNG

(21) Anmeldenummer: 87110531.8

(22) Anmeldetag: 21.07.87

(51) Int. Cl.⁴: **G02B 15/14 , G02B 13/14**

(30) Priorität: 25.07.86 DE 3625128

(43) Veröffentlichungstag der Anmeldung:
27.01.88 Patentblatt 88/04

(84) Benannte Vertragsstaaten:
**DE ES FR GB IT NL**

(71) Anmelder: **Firma Carl Zeiss**

**D-7920 Heidenheim (Brenz)(DE)**

(84) **DE ES FR GB IT NL**

(71) Anmelder: **CARL-ZEISS-STIFTUNG trading as CARL ZEISS**

**D-7920 Heidenheim (Brenz)(DE)**

(84) **GB**

(72) Erfinder: **Aurin, Friedrich, Dr.**
**Lukas Cranach-Strasse 24**
**D-7920 Heidenheim(DE)**
Erfinder: **Loy**
**2 Allée des Tilleuls**
**F-92330 Sceaux(FR)**
Erfinder: **Perrin, J. C.**
**92 Rue Rambuteau**
**F-71000 Macon(FR)**

(54) **Vario-Objektiv für infrarot.**

(57) Für $CO_2$-Laser-Scanner wird ein Varioobjektiv für ein Aufwertungsteleskop zur variablen Veränderung der Vergrößerung des Strahlenbündelquerschnitts und damit der Verminderung der beugungsbedingten Divergenz des Strahlenbündels über einen Bereich von 1:30 angegeben, das aus drei ein-oder mehrlinsigen Teilsystemen besteht.

Fig.1

## Varioobjektiv für Infrarot

Die Erfindung betrifft ein Varioobjektiv für den infraroten Wellenlängenbereich, das vorzugsweise für Aufweitungsteleskope (Kepler-Fernrohre) von $CO_2$-Laser-Scanner verwendet werden soll.

Für $CO_2$-Laser-Scanner wird eine variable Verminderung der beugungsbedingten Divergenz des Strahlenbündels über einen großen Bereich gefordert, z.B. 1:30 bis 1:100. Beim Scannen, das eine Richtungsänderung des Parallelstrahlenbündels bewirkt, soll kein Beschnitt des Strahlenbündels auftreten. Außerdem soll das Scannen dort erfolgen, wo das Laserstrahlenbündel den kleinsten Querschnitt hat, damit die Scannerbaugruppen möglichst klein und der Energiebedarf für den Scannerantrieb möglichst gering zu halten sind.

Diese Forderungen lassen sich mit einem umgekehrten Kepler-Teleskop erfüllen. Bei einem umgekehrten Kepler-Teleskop trifft der Laserstrahl erst auf ein kurzbrennweitiges sammelndes System, das ein reelles Zwischenbild erzeugt und dann auf ein langbrennweitigeres sammelndes System, das dieses Zwischenbild nach unendlich abbildet. Ein Vorzug des Kepler-Teleskop ist, daß die Eintrittspupille reell ist, also vor dem kurzbrennweitigen sammelnden System am Ort des Scanners liegt und die Austrittspupille ins Objektiv abgebildet werden kann, weshalb bei beschnittfreier Pupillenabbildung der kleinste Objektivdurchmesser erreicht wird.

Eine weitere Forderung für $CO_2$-Laser-Scanner ist, daß keine Linse bei der Vergrößerungsänderung einen Ort mit einer Zwischenbildebene für unendlich ferne Objekte erreicht, weil dort auch das Laserstrahlenbündel seine engste Einschnürung und damit seine höchste Energiekonzentration hat. Verunreinigungen auf oder in der Linse würden den Laserstrahl abschatten. Bei hoher Energiedichte des Laserstrahlenbündels kann dies auch zur Zerstörung der Linse führen.

Der Erfindung liegt die Aufgabe zugrunde ein Varioobjektiv für Aufweitungsteleskope von $CO_2$-Laser-Scannern anzugeben, das die genannten Forderungen erfüllt.

Diese Aufgabe wird erfindungsgemäß durch ein Varioobjektiv erfüllt, das sich dadurch auszeichnet, daß es aus drei Teilsystemen besteht, von denen - in umgekehrter Richtung des auftreffenden Laserstrahls gezählt - das erste Teilsystem als Fokator wirkt und positive Brechkraft aufweist, das zweite Teilsystem als Variator wirkt und negative Brechkraft aufweist und das dritte Teilsystem als Kompensator wirkt und positive Brechkraft aufweist und daß

a) seine optische Baulänge (l) bei Reduktion der Dicke der Teilsysteme auf den Wert 0 (Null) vom 1. Linsenscheitel des ersten Teilsystems bis zur Bildebene

$$l = f'_1 + 4 (f'_2 + f'_3)$$

ist, wobei mit $f'_1$, $f'_2$ und $f'_3$ die Brennweiten des ersten, des zweiten und des dritten Teilsystems der Dicke 0 (Null) bezeichnet ist,

b) ein Abstand $d_{23}$ zwischen dem zweiten und dritten Teilsystem bei Reduktion der Dicke der Teilsysteme auf den Wert 0 (Null) von

$$d_{23} = 3 (f'_2 + f'_3)$$

für die längste Systembrennweite realisierbar ist,

c) ein Verhältnis der Brennweiten der Teilsysteme von 1:30 erreichbar ist, ohne daß im erforderlichen Verschiebebereich der Linsen oder Teilsysteme ein unendlich fernes Objekt an den Ort einer Linse oder eines Teilsystems abgebildet wird.

Bei Reduktion der Teilsysteme endlicher Dicke auf Linsen der Dicke 0 (Null) gibt es für die Dimensionierung des Varioobjektivs zwei ausgezeichnete Linsenstellungen. In der ersten Stellung wird das von erstem Teilsystem erzeugte Zwischenbild vom zweiten Teilsystem virtuell im Maßstab -1 und dieses Zwischenbild vom dritten Teilsystem reell im Maßstab -1 abgebildet. Diese spezielle Linsenstellung ist für die Baulänge l es Systems vom ersten Linsenscheitel bis zur Bildebene maßgebend.

In Anlehnung an die Gepflogenheiten bei der Beschreibung von Photoobjektiven werden die Linsen entgegen der Laserstrahlrichtung gezählt. Die letzte Linse des Systems wird also zuerst vom Laserstrahlenbündel getroffen.

Die zweite spezielle Linsenstellung ist gleichzeitig die Stellung mit der längsten Brennweite des Varioobjektivs. In dieser Stellung bilden das erste und zweite Teilsystem ein afokales System in Form eines Galilei-Fernrohrs. Das dritte Teilsystem erzeugt ein reelles Bild des unendlich fernen Objekts. Um ein scharfes Bild zu erzeugen, kann der Abstand zwischen dem zweiten und dem dritten Teilsystem beliebig gewählt werden, wegen des Parallelstrahlenganges zwischen diesen Teilsystemen. Der Abstand wird jedoch so gewählt, daß die Baulänge des Systems mit der in der ersten speziellen Stellung übereinstimmt.

Die kürzeste Brennweite erhält man, wenn das erste und zweite Teilsystem möglichst dicht zusammengerückt werden und der Abstand des dritten Teilsystems so gewählt wird, daß der Betrag des Abbildungsmaßstabes für das Teilsystem kleiner als 1 ist. Um diesen Abstand zu finden, ist eine quadratische Gleichung zu lösen.

$f'_{12}$ = Brennweite der Gruppe aus den Teilsystemen 1 und 2

$$f'_{1,2} = \frac{f'_1 \cdot f'_2}{f'_1 + f'_2 - d_{12}}$$

$s'_{F'1,2}$ = bildseitige Brennpunktschnittweite der Gruppe aus Teilsystemen 1 und 2

$$s'_{F12} = \frac{f'_1 \cdot f'_2 - d_{12} \cdot f'_2}{f'_1 + f'_2 - d_{12}}$$

$d_{12}$ = Abstand des zweiten Teilsystems vom ersten Teilsystem

$l_3$ = Strecke von der Dingebene des Teilsystems 3 bis zur Bildebene

$l_3 = 1 - s'_{F'12} - d_{12}$

$s_3$ = Dingweite im Teilsystem 3

$$s_3 = \frac{-l_3 - (l_3^2 - 4 \cdot l_3 - f'_3)^{1/2}}{2}$$

$s'_3$ = Bildweite im Teilsystem 3

$$s'_3 = \frac{l_3 - (l_3^2 - 4 \cdot l_3 - f_3)^{1/2}}{2}$$

$d_{23}$ = Abstand des 3. Teilsystems vom 2. Teilsystem

In gleicher Weise, wie man das System mit der kürzesten Brennweite berechnet, kann man auch den Abstand $d_{23}$ zwischen dem zweiten und dritten Teilsystem als Funktion des Abstandes $d_{12}$ zwischen dem ersten und zweiten Teilsystem berechnen.

Ein Ausführungsbeispiel der Erfindung ist in der Zeichnung dargestellt und wird im folgenden näher beschrieben. Es zeigen:

Fig. 1 ein Schaubild für die Daten des erfindungsgemäßen Varioobjektivs für drei verschiedene Positionen der Teilsysteme;

Fig. 2 eine schematische Darstellung des erfindungsgemäßen Varioobjektivs in einem Keplerfernrohr in der Position 1;

Fig. 3 eine schematische Darstellung des erfindungsgemäßen Varioobjektivs in einem Keplerfernrohr in der Position 2;

Fig. 4 eine schematische Darstellung des erfindungsgemäßen Varioobjektivs in einem Keplerfernrohr in der Position 3.

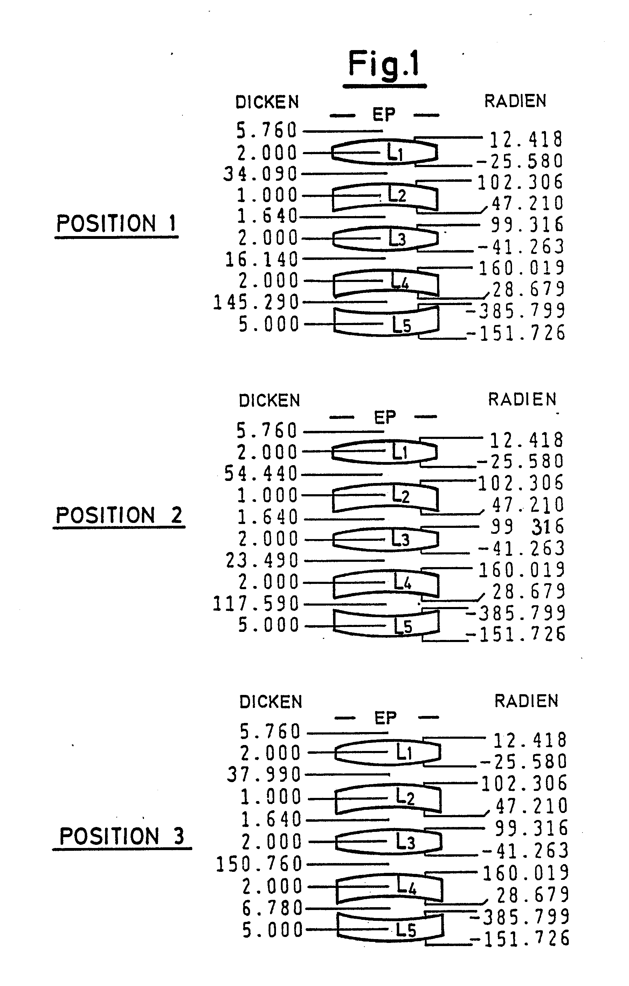

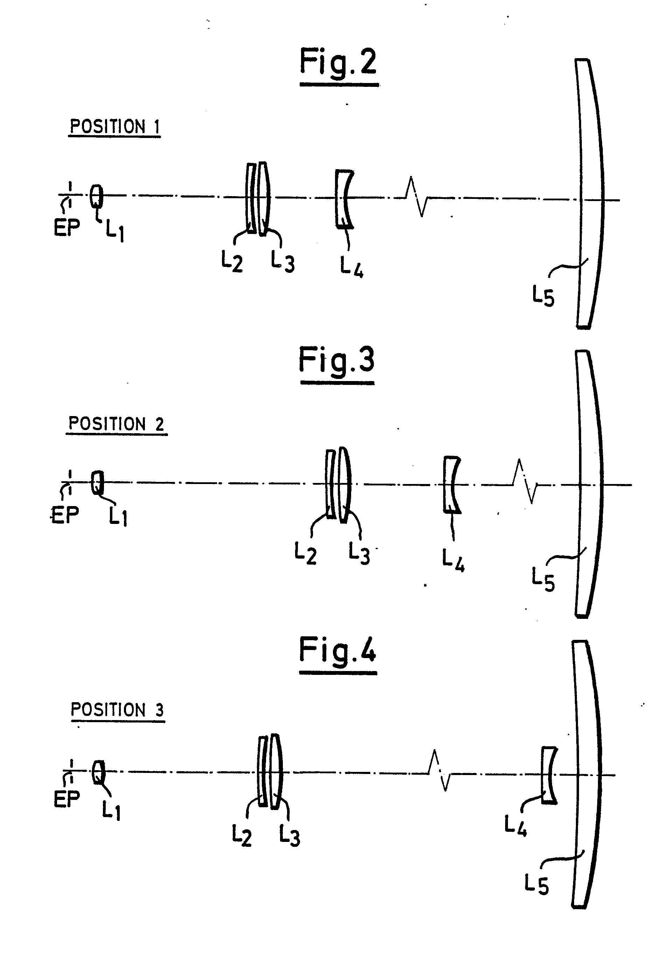

Im Datenschaubild der Fig.1 sind die Einzellinsen des Varioobjektivs und die Luftabstände entgegen der Laserstrahlrichtung durchnumeriert und aufgeführt. Die numerischen Werte für die Längenmaße der Krümmungsradien, Linsendicken und Luftabstände sind in mm angegeben. Die Linsen sind aus Zinkselenid gefertigt. In den Fig. 2 - 4 sind die Einzellinsen in gleicher Weise durchnumeriert. Die Eintrittspupille ist jeweils mit EP bezeichnet.

**Ansprüche**

1. Varioobjektiv, dadurch gekennzeichnet, daß es aus drei entlang der optischen Achse verschiebbaren Teilsystemen besteht, von denen - in umgekehrter Richtung des auftretenden Laserstrahls gezählt - das erste Teilsystem als Fokator wirkt und positive Brechkraft aufweist, das zweite Teilsystem als Variator wirkt und negative Brechkraft aufweist und das dritte Teilsystem als Kompensator wirkt und positive Brechkraft aufweist un daß

a) seine optische Baulänge (l) bei Reduktion der Dicke der Teilsysteme auf den Wert 0 (Null) vom 1. Linsenscheitel des ersten Teilsystems bis zur Bildebene

$l = f'_1 + 4 (f'_2 + f'_3)$

ist, wobei mit $f'_1$, $f'_2$ und $f'_3$ die Brennweiten des ersten, des zweiten und des dritten Teilsystems der Dicke 0 (Null) bezeichnet ist,

b) ein Abstand $d_{23}$ zwischen dem zweiten und dritten Teilsystem bei Reduktion der Dicke der Teilsysteme auf den Wert 0 (Null) von

$d_{23} = 3 (f'_2 + f'_3)$

für die längste Systembrennweite realisierbar ist,

c) für das Gesamtsystem ein Verhältnis der Brennweiten von 1:30 erreichbar ist, ohne daß im erforderlichen Verschiebebereich der Linsen oder Teilsysteme ein unendlich fernes Objekt an den Ort einer Linse oder eines Teilsystems abgebildet wird.

2. Varioobjektiv nach Anspruch 1, dadurch gekennzeichnet, daß die Teilsysteme als einlinsige Systeme aufgebaut sind.

3. Varioobjektiv nach Anspruch 1, dadurch gekennzeichnet, daß die Teilsysteme als mehrlinsige Systeme aufgebaut sind.

4. Varioobjektiv nach Anspruch 1, dadurch gekennzeichnet, daß die Linsen der Teilsysteme aus Zink-Selenid gefertigt sind.

5. Varioobjektiv nach Anspruch 4, dadurch gekennzeichnet, daß das dritte Teilsystem aus einer Samnmel-und einer Zer streuungslinse besteht.

6. Varioobjektiv nach Anspruch 4, dadurch gekennzeichnet, daß die Linsen der Teilsysteme so durchgebogen sind, daß der von jeder Linsenfläche verursachte Narziß (Selbstabbildung) weniger als 1% von dem Narziß beträgt, der von einer vor dem Linsensystem befindlichen Grenzfläche gleichen Brechzahlsprungs und gleicher Entspiegelung erzeugt wird.

7. Varioobjektiv nach Anspruch 4, dadurch gekennzeichnet, daß es für Aufweitungsteleskope (Kepler-Fernrohre) in $CO_2$ Laser-Scanner verwendet wird.

4

# Fig.1

**POSITION 1**

DICKEN — EP — RADIEN

| DICKEN | | RADIEN |
|---|---|---|
| 5.760 | L1 | 12.418 |
| 2.000 | | -25.580 |
| 34.090 | L2 | 102.306 |
| 1.000 | | 47.210 |
| 1.640 | L3 | 99.316 |
| 2.000 | | -41.263 |
| 16.140 | L4 | 160.019 |
| 2.000 | | 28.679 |
| 145.290 | L5 | -385.799 |
| 5.000 | | -151.726 |

**POSITION 2**

DICKEN — EP — RADIEN

| DICKEN | | RADIEN |
|---|---|---|
| 5.760 | L1 | 12.418 |
| 2.000 | | -25.580 |
| 54.440 | L2 | 102.306 |
| 1.000 | | 47.210 |
| 1.640 | L3 | 99 316 |
| 2.000 | | -41.263 |
| 23.490 | L4 | 160.019 |
| 2.000 | | 28.679 |
| 117.590 | L5 | -385.799 |
| 5.000 | | -151.726 |

**POSITION 3**

DICKEN — EP — RADIEN

| DICKEN | | RADIEN |
|---|---|---|
| 5.760 | L1 | 12.418 |
| 2.000 | | -25.580 |
| 37.990 | L2 | 102.306 |
| 1.000 | | 47.210 |
| 1.640 | L3 | 99.316 |
| 2.000 | | -41.263 |
| 150.760 | L4 | 160.019 |
| 2.000 | | 28.679 |
| 6.780 | L5 | -385.799 |
| 5.000 | | -151.726 |

## Fig.2

POSITION 1

EP  $L_1$

$L_2$  $L_3$

$L_4$

$L_5$

## Fig.3

POSITION 2

EP  $L_1$

$L_2$  $L_3$

$L_4$

$L_5$

## Fig.4

POSITION 3

EP  $L_1$

$L_2$  $L_3$

$L_4$

$L_5$